# EUROPEAN PATENT SPECIFICATION

(11) **EP 1 230 618 B1**
(45) Date of publication and mention of the grant of the patent: **09.02.2005**
(21) Application number: 00976145.3
(22) Date of filing: 16.11.2000
(51) Int. Cl.: G06K 1/12, G07F 7/02

(54) **CARD-MARKING DEVICES**
MARKIERUNGSVORRICHTUNG FÜR KARTEN
DISPOSITIFS DE MARQUAGE DE CARTES

(30) Priority: 17.11.1999 GB 9927145
(43) Date of publication of application: 14.08.2002
(73) Proprietor: Landis+Gyr Limited, Telford Shropshire TF1 7YG (GB)
(72) Inventor: HAMER, Mark, Littlebrough Lancashire OL15 044 (GB); DYTCH, Anthony, Wolverhampton Lancashire WV6 8EH (GB)
(74) Representative: Humphrey-Evans, Edward John
(86) International application number: PCT/GB2000/004357
(87) International publication number: WO 2001/037198

(56) References cited:
- EP-A- 0 351 089
- WO-A-81/03562
- GB-A- 2 134 682

## Description

The present invention relates to card-marking devices, and is more particularly, although not exclusively, concerned with marking of utility pre-payment cards.

It is well known to use pre-payment cards in pre-payment utility meters - particularly in gas and electricity meters. Each pre-payment card carries a magnetic stripe in which information is recorded relating to the value of the card, the utility and the type of meter with which the card is to be used.

Pre-payment meters which accept pre-payment cards typically comprise a slot into which the card is inserted, a reading head associated with the slot for reading the information on the magnetic card and an erase device for cancelling the information on the card if the card is found to be valid and suitable for the particular meter. Such meters also include card-marking devices for providing a mark on the card indicating that the card has been used and is therefore no longer valid. One such card-marking device is described in GB-B-2 134 682.

In GB-B-2 134 682, which represents the closest prior art, the card-marking device comprises means for defining a slot for receiving a card, means for reading the card, means for erasing the card and a rotatable arm carrying means for forming perforations in the card. The arm lies in a dormant position which is clear of the slot to allow insertion of the card. Once the card is inserted into the slot, it is read and if the card is found to be valid, the information is transferred to the meter and erased from the card, and the arm is driven by a motor into a position where the means for forming perforations engages the card. As the card is withdrawn from the slot, the arm is caused to move in the direction of withdrawal with the card through an impression-forming position where perforations are formed in the card. When the card is removed from the slot, the arm can return to its dormant position under the action of a spring.

However, the card-marking device described in GB-B-2 134 682 has the disadvantage that if the motor fails for any reason, none of the cards will be marked, that is perforated or otherwise defaced, and there will be no indication of whether the cards are valid or not.

It is therefore an object of the present invention to provide a card-marking device which defaults to marking the card in the event of motor or drive failure.

In accordance with one aspect of the present invention, there is provided a method of marking a card inserted into a slot, the method comprises the steps of:-
a) inserting a card into the slot;
b) using the card to move a card-marking arm from a dormant position in which the arm projects into the slot to a resting position in which the arm rests on the surface of the card;
c) determining if the card is valid;
d) driving the card-marking arm from the resting position into a substantially non-marking position if the card is not valid; and
e) withdrawing the card from the slot, the card being marked as it is withdrawn from the slot if it is valid.

In accordance with another aspect of the present invention, there is provided a card-marking device comprising:-
slot defining means for defining a slot into which a card can be inserted;
card reading means for reading information on an inserted card;
processing means for determining whether the card is valid using information read from the card; and
marking means for marking the card;
characterised in that the marking means comprises a movable arm which projects into the slot in a dormant position, the arm being moved out of the slot by the insertion of the card and into a resting position in which the arm rests on the surface of the card, and a motor for driving the movable arm to a substantially non-marking position if the card is not valid;
and in that, if the card is valid, withdrawal of the card from the slot moves the arm through a card-marking position.

In accordance with a further aspect of the present invention, there is provided a utility meter including a card-marking device as described above.

For a better understanding of the present invention, reference will now be made, by way of example only, to the accompanying drawings in which:-
Figure 1 is a schematic view of a first embodiment of a card-marking device in a dormant position in accordance with the present invention;
Figure 2 is a schematic view of a first embodiment of a card-marking device on insertion of a card in accordance with the present invention;
Figure 3 is a schematic view of a first embodiment of a card-marking device in a substantially non-marking position in accordance with the present invention;
Figure 4 is a schematic view of a second embodiment of a card-marking device in a dormant position in accordance with the present invention;
Figure 5 is a schematic view of a second embodiment of a card-marking device on insertion of a card in accordance with the present invention; and
Figure 6 is a schematic view of a second embodiment of a card-marking device in a substantially non-marking position in accordance with the present invention.

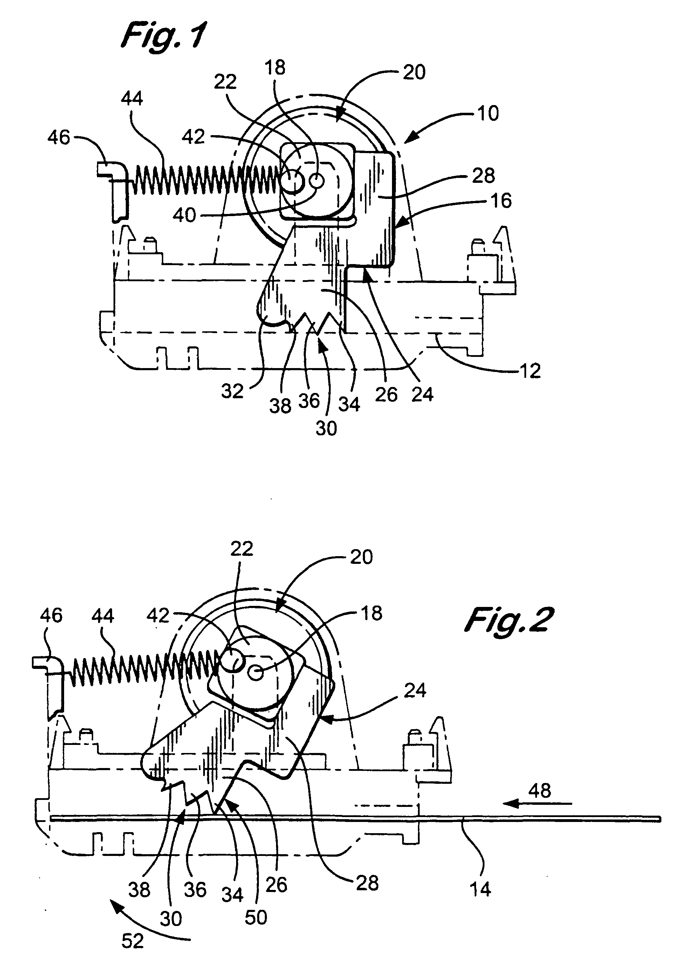

Referring initially to Figures 1 to 3, a card-marking device for a pre-payment meter (not shown) is shown generally at 10. The device 10 comprises a slot 12 into which a card 14 carrying information can be inserted for reading and subsequently crediting the meter with an amount of units as determined by information stored in a magnetic stripe (not shown) provided on the card. Information in the magnetic stripe may include an indication of the meter with which the card 14 is to be used, amount of credit, and any other information which is relevant to the operation of the meter. A card 14 is determined to be valid when information appropriate for a particular meter is read therefrom.

The device 10 also includes a cranked card-marking arm 16 which is mounted on a spindle 18 which can be driven by a motor 20. As shown, the card-marking arm 16 comprises a hub portion 22 mounted on the spindle 18 and an arm portion 24. The arm portion 24 comprises a marking portion 26, and a connecting portion 28 which connects the marking portion 26 with the hub portion 22. As shown, the marking portion 26 comprises a serrated edge 30 having a rounded comer 32, the serrated edge 30 having three sharp points 34, 36, 38.

The arm portion 24 is substantially planar, and can be formed from any suitable sheet material, for example, sheet steel. The hub portion 22 may be moulded from a thermoplastic material and joined to the arm portion 24. Alternatively, the hub portion 22 may be moulded directly onto the connecting portion 28 of the arm portion 24. Naturally, the hub portion 22 and the connecting portion 28 can be made of any other suitable materials and can be joined or connected in any suitable way without departing from the present invention.

The hub portion 22 has a central bore 40 which fits over the spindle 18 and a lug 42 located adjacent its periphery. An elongate tension spring 44 is connected at one end to the lug 42 and at the other end to a mounting post 46.

As shown in Figure 1, in a dormant position, the spring 44 lies substantially in a plane connecting the mounting post 46 and the lug 42 with the marking portion 26 of the arm portion 24 extending into the slot 12. It will readily be appreciated that, although the spring 44 is shown to be lying generally horizontally with the arm portion 24 extending generally vertically, these components can have different orientations provided they are substantially orthogonal to one another.

In Figure 2, a card 14 is inserted into the slot 12 in the direction indicated by arrow 48. As the card 14 enters the slot 12, it engages a front portion 50 of the serrated edge 30 and pushes it out of the way in the direction indicated by arrow 52, rotating the arm portion 24 about the spindle 18, until the card is fully inserted and the arm portion 24 rests on the card 14 as shown. It will readily be noted that, in this position, point 34 of the serrated edge 30 engages the card 14.

Information carried on a magnetic stripe (not shown) on the card 14 is read by a reading device (also not shown). If the information is found to be valid, the card-marking arm 16 remains in the position shown in Figure 2 until the card 14 is removed from the slot 12. As the card 14 is removed from the slot 12, the card-marking arm 16 is rotated by the card 14 against the action of the spring 44 in the opposite direction to that shown by arrow 52. Movement of the card 14 in the direction opposite to that shown by arrow 48 pulls the card-marking arm 16 through a marking position where the points 34, 36, 38 perforate the card 14 to provide the desired marking. When the card 14 is clear of the slot 12, the spring 44 returns the card-marking arm 16 to the position shown in Figure 1.

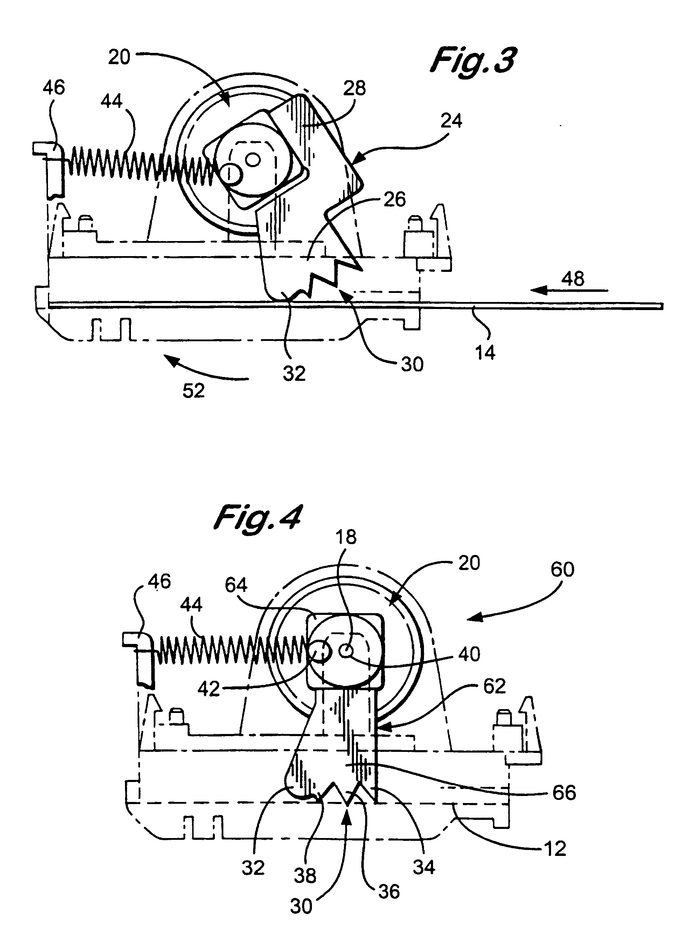

If, on the other hand, the card 14 is found to be invalid for the particular meter, the motor 20 is energised and spindle 18 is driven in a clockwise direction (as viewed in the Figures) so as to rotate the card-marking arm 16 through at least 180° to a substantially non-marking position as shown in Figure 3. In this position, the rounded comer 32 of the serrated edge 30 lies on the card 14 and as it is rounded, it does not produce any substantial marking of the card, and the card 14 can be withdrawn without being marked.

In this case, as the card 14 is removed from the slot 12, the rounded comer 32 of the serrated edge 30 remains on the card 14 in the position shown in Figure 3 until the card 14 has been withdrawn sufficiently for the spring 44 to return the card-marking arm 16 to its dormant position shown in Figure 1 by rotating the card-marking arm 16 in the direction of arrow 52.

Referring now to Figures 4 to 6 where a second embodiment of a card-marking device according to the present invention is shown generally at 60. Component parts which have been described above bear the same reference numerals.

The device 60 comprises a slot 12 into which a card 14 can be inserted as described above. The device 60 also includes a straight card-marking arm 62 which is mounted on a spindle 18 which can be driven by a motor 20. As shown, the card-marking arm 62 comprises a hub portion 64 mounted on the spindle 18 and an arm portion 66. The arm portion 66 is connected to the hub portion 64 and comprises a marking portion 68 carried at its free end. As before, the marking portion 68 comprises a serrated edge 30 having a rounded comer 32, the serrated edge 30 having three sharp points 34, 36, 38.

As described above, the arm portion 66 is substantially planar, and can be formed from any suitable sheet material, for example, sheet steel. The hub portion 64 may be moulded from a thermoplastic material and joined to the arm portion 66. Alternatively, the hub portion 64 may be moulded directly onto the arm portion 66. Naturally, the hub portion 64 and the arm portion 66 can be made of any other suitable materials and can be joined or connected in any suitable way without departing from the present invention.

The hub portion 64 has a central bore 40 which fits over the spindle 18 and a lug 42 located adjacent its periphery. An elongate tension spring 44 is connected at one end to the lug 42 and at the other end to a mounting post 46.

As shown in Figure 4, in a dormant position, the spring 44 lies substantially in a plane connecting the mounting post 46 and the lug 42 with the marking portion 68 of the arm portion 66 extending into the slot 12. It will readily be appreciated that, although the spring 44 is shown to be lying generally horizontally with the arm portion 66 extending generally vertically, these components can have different orientations provided they are substantially orthogonal to one another.

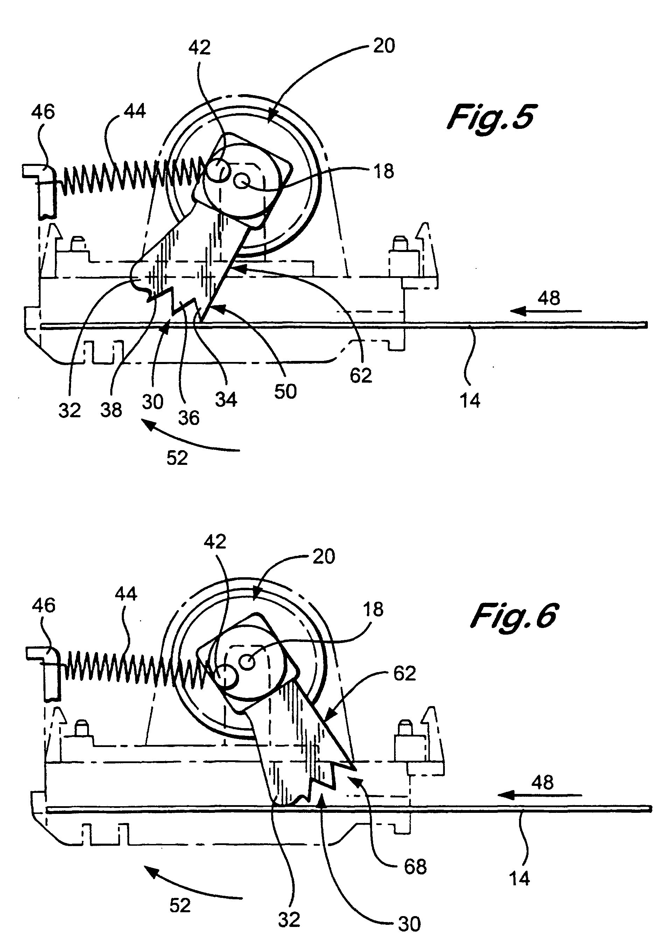

In Figure 5, a card 14 is inserted into the slot 12 in the direction indicated by arrow 48. As the card 14 enters the slot 12, it engages a front portion 50 of the serrated edge 30 and pushes it out of the way in the direction indicated by arrow 52, rotating the arm portion 66 about the spindle 18, until the card is fully inserted and the arm portion 66 rests on the card 14 as shown. It will readily be noted that, in this position, point 34 of the serrated edge 30 engages the card 14.

As described above, information carried on a magnetic stripe (not shown) on the card 14 is read by a reading device (also not shown). If the information is found to be valid, the card-marking arm 62 remains in the position shown in Figure 5 until the card 14 is removed from the slot 12. As the card 14 is removed from the slot 12, the card-marking arm 62 is rotated by the card 14 against the action of the spring 44 in the opposite direction to that shown by arrow 52. Movement of the card 14 in the direction opposite to that shown by arrow 48 pulls the card-marking arm 16 through a marking position where the points 34, 36, 38 perforate the card 14 to provide the desired marking. When the card 14 is clear of the slot 12, the spring 44 returns the card-marking arm 62 to the position shown in Figure 4.

If, on the other hand, the card 14 is found to be invalid for the particular meter, the motor 20 is energised and spindle 18 is driven in a clockwise direction (as viewed in the Figures) so as to rotate the card-marking arm 62 through at least 180° to a substantially non-marking position as shown in Figure 6. In this position, the rounded comer 32 of the serrated edge 30 lies on the card 14 and as it is rounded, it does not produce any substantial marking of the card, and the card 14 can be withdrawn without being marked.

In this case, as the card 14 is removed from the slot 12, the rounded comer 32 of the serrated edge 30 remains on the card 14 in the position shown in Figure 6 until the card 14 has been withdrawn sufficiently for the spring 44 to return the card-marking arm 62 to its dormant position shown in Figure 4 by rotating the card-marking arm 62 in the direction of arrow 52.

It will be appreciated that the card-marking arm is not limited to the two configurations described above, but can have different configurations depending on the particular arrangement of the card-marking device.

Naturally, the card-marking device in accordance with the present invention may include a processing unit for determining if the inserted card is valid. Alternatively, the card-marking device may be controlled by signals from a processing unit associated with the pre-payment meter which reads the inserted card and determines if it is valid or not.

The card-marking device of the present invention can be utilised in any suitable pre-payment utility meter, for example, a gas meter or an electricity meter.

## Claims

1. A method of marking a card (14) inserted into a slot (12), the method comprises the steps of:-
a) inserting a card into the slot;
b) using the card to move a card-marking arm (16) from a dormant position in which the arm projects into the slot to a resting position in which the arm rests on the surface of the card;
c) determining if the card is valid;
d) driving the card-marking arm from the resting position into a substantially non-marking position if the card is not valid; and
e) withdrawing the card from the slot, the card being marked as it is withdrawn from the slot if it is valid.

2. A method according to claim 1, wherein step e) comprises moving the card-marking arm as the card is withdrawn from the slot through a card-marking position if the card is valid.

3. A method according to claim 1 or 2, wherein step c) comprises reading information on the card to determine if the card is valid.

4. A method according to any one of claims 1 to 3, wherein step c) comprises erasing the card if it is valid.

5. A method according to any one of the preceding claims, further comprising the step of returning the card-marking arm to its dormant position on removal of the card from the slot.

6. A method according to any one of the preceding claims, further comprising the step of marking the card in the event of drive failure.

7. A card-marking device (10) comprising:-
slot defining means for defining a slot (12) into which a card (14) can be inserted;
card reading means for reading information on an inserted card;
processing means for determining whether the card is valid using information read from the card; and
marking means for marking the card;
**characterised in that** the marking means comprises a movable arm (16) which projects into the slot in a dormant position, the arm being moved out of the slot by the insertion of the card and into a resting position in which the arm rests on the surface of the card, and a motor (20) for driving the movable arm to a substantially non-marking position if the card is not valid;
**and in that**, if the card is valid, withdrawal of the card from the slot moves the arm through a card-marking position.

8. A device according to claim 7, wherein the movable arm comprises at least one projection (34,36,38) for marking the card.

9. A device according to claim 7 or 8, further comprising means (44) for returning the movable arm to its dormant position after the card has been withdrawn from the slot.

10. A device according to claim 9, wherein the means for returning the movable arm comprises a spring.

11. A device according to claim 10, wherein the spring is connected between a lug (42) formed on the movable arm and a fixed point (46) on the device.

12. A device according to claim 11, wherein the lug is located at a position on the movable arm such that the card-marking arm is biased into the dormant position.

13. A utility meter including a card-marking device according to any one of claims 7 to 12.

## Patentansprüche

1. Verfahren zur Kennzeichnung einer in einen Schlitz (12) eingesteckten Karte (14), das die folgenden Schritte aufweist:
a) Einführen einer Karte in den Schlitz;
b) Verwenden der Karte, um einen Kartenkennzeichnungsarm (16) aus einer Ruhestellung, in der er in den Schlitz vorsteht, in eine Auflagestellung zu bringen, in der er auf der Oberfläche der Karte aufliegt;
c) Feststellen, ob die Karte gültig ist;
d) Antreiben des Kartenkennzeichnungsarms aus der Auflagestellung in eine im Wesentlichen nicht-kennzeichnende Stellung, wenn die Karte nicht gültig ist; und
e) Entnahme der Karte aus dem Schlitz, wobei die Karte bei ihrer Entnahme aus dem Schlitz gekennzeichnet wird, wenn sie gültig ist.

2. Verfahren nach Anspruch 1, wobei Schritt e) bei der Entnahme der Karte aus dem Schlitz die Bewegung des kartenkennzeichnenden Arms durch eine kartenkennzeichnende Stellung enthält, wenn die Karte gültig ist.

3. Verfahren nach Anspruch 1 oder 2, wobei Schritt c) das Lesen der Informationen auf der Karte enthält, um festzustellen, ob die Karte gültig ist.

4. Verfahren nach einem der Ansprüche 1 bis 3, wobei Schritt c) das Löschen der Karte enthält, wenn sie gültig ist.

5. Verfahren nach einem der vorhergehenden Ansprüche, das weiter bei der Entnahme der Karte aus dem Schlitz den Schritt des Rückführens des kartenkennzeichnenden Arms in seine Ruhestellung enthält.

6. Verfahren nach einem der vorhergehenden Ansprüche, das weiter den Schritt des Kennzeichnens der Karte bei einer Betriebsstörung enthält.

7. Kartenkennzeichnungsvorrichtung (10), die aufweist:
schlitzdefinierende Mittel zum Definieren eines Schlitzes (12), in den eine Karte (14) eingeführt werden kann;
Kartenlesemittel zum Lesen der Information auf einer eingeführten Karte;
Verarbeitungsmittel, um unter Verwendung der auf der Karte gelesenen Information festzustellen, ob die Karte gültig ist; und
eine Kennzeichnungseinrichtung zum Kennzeichnen der Karte;
**dadurch gekennzeichnet, dass** die Kennzeichnungseinrichtung einen beweglichen Arm (16), der in einer Ruhestellung in den Schlitz hineinragt, wobei der Arm durch das Einführen der Karte aus dem Schlitz heraus und in eine Auflagestellung bewegt wird, in der er auf der Oberfläche der Karte aufliegt, und einen Motor (20) für den Antrieb des beweglichen Arms in eine im wesentlichen nicht-kennzeichnende Stellung aufweist, wenn die Karte nicht gültig ist;
**und dass**, wenn die Karte gültig ist, die Entnahme der Karte aus dem Schlitz den Arm durch eine kartenkennzeichnende Stellung bewegt.

8. Vorrichtung nach Anspruch 7, wobei der bewegliche Arm mindestens einen Vorsprung (34, 36, 38) zum Kennzeichnen der Karte aufweist.

9. Vorrichtung nach Anspruch 7 oder 8, die weiter eine Einrichtung (44) zur Rückführung des beweglichen Arms in seine Ruhestellung aufweist, nachdem die Karte aus dem Schlitz entnommen wurde.

10. Vorrichtung nach Anspruch 9, wobei die Einrichtung zur Rückführung des beweglichen Arms eine Feder aufweist.

11. Vorrichtung nach Anspruch 10, wobei die Feder zwischen einem auf dem beweglichen Arm ausgebildeten Ansatz (42) und einem ortsfesten Punkt (46) auf der Vorrichtung verbunden ist.

12. Vorrichtung nach Anspruch 11, wobei der Ansatz in einer derartigen Stellung auf dem beweglichen Arm angeordnet ist, dass der kartenkennzeichnende Arm in die Ruhestellung vorgespannt wird.

13. Versorgungszähler, der eine kartenkennzeichnende Vorrichtung nach einem der Ansprüche 7 bis 12 aufweist.

## Revendications

1. Un procédé de marquage d'une carte (14) introduite dans une fente (12), le procédé comprend les phases suivantes :
a) insertion d'une carte dans une fente;
b) utilisation de la carte pour déplacer un bras de marquage de carte (16) d'une position dormante, dans laquelle le bras fait saillie dans la fente, en une position de repos dans laquelle le bras repose sur la surface de la carte;
c) détermination de la validité de la carte;
d) actionnement du bras de marquage d'une position de repos dans une position essentiellement de non marquage si la carte n'est pas valable;
e) retrait de la carte de la fente, le marquage de la carte étant effectué au moment où la carte est retirée de la fente si elle est valable.

2. Un procédé selon la revendication 1 dans lequel la phase e) comprend le déplacement du bras de marquage de carte au moment du retrait de la carte de la fente en passant par la position de marquage de carte si la carte est valable.

3. Un procédé selon l'une des revendications 1 ou 2 dans lequel la phase c) comprend la lecture des informations sur la carte pour déterminer si la carte est valable.

4. Un procédé selon l'une des revendications 1 à 3 dans lequel la phase c) comprend l'effacement de la carte si elle est valable.

5. Un procédé selon l'une des revendications précédentes, comprenant de plus une phase pour renvoyer le bras de marquage de carte à sa position dormante lors du retrait de la carte de la fente.

6. Un procédé selon l'une quelconque des revendications précédentes, comprenant de plus une phase de marquage de la carte dans le cas d'une erreur de commande.

7. Un dispositif de marquage de carte (10) comprenant
des moyens pour définir une fente (12) dans laquelle une carte (14) peut être introduite;
des moyens de lecture pour lire les informations sur une carte introduite;
des moyens de traitement pour déterminer si la carte est valable en utilisant les informations lues sur la carte; et
des moyens de marquage pour procéder au marquage de la carte;
**caractérisé en ce que** les moyens de marquage comprennent un arbre mobile (16) faisant saillie dans la fente en position dormante, le bras étant repoussé hors de la fente lors de l'introduction de la carte et mis en position de repos dans laquelle le bras repose sur la surface de la carte, et un moteur (20) pour actionner l'arbre mobile dans une position essentiellement de non marquage si la carte n'est pas valable;
**et en ce que**, si la carte est valable, le retrait de la carte de la fente déplace le bras en une position de marquage de carte.

8. Un dispositif selon la revendication 7 dans lequel l'arbre mobile comprend au moins une prolongation (34, 36, 38) pour le marquage de la carte.

9. Un dispositif selon la revendication 7 ou 8, comprenant de plus des moyens (44) pour renvoyer l'arbre mobile à sa position dormante. lorsque la carte a été retirée de la fente.

10. Un dispositif selon la revendication 9 dans lequel les moyens pour renvoyer l'arbre mobile comprennent un ressort.

11. Un dispositif selon la revendication 10 dans lequel le ressort est intercalé entre une saillie (42) formée sur l'arbre mobile et un point fixe (46) sur le dispositif.

12. Un dispositif selon la revendication 11 dans lequel la saillie est placée sur l'arbre mobile de manière à ce que l'arbre de marquage de carte soit incliné en position dormante.

13. Un compteur utilitaire comprenant un dispositif de marquage de carte selon l'une quelconque des revendications 7 à 12.
